# EUROPEAN PATENT SPECIFICATION

(11) **EP 0 767 116 B1**
(45) Date of publication and mention of the grant of the patent: **11.04.2001**
(21) Application number: 96610023.2
(22) Date of filing: 10.06.1996
(51) Int. Cl.: B65G 19/14

(54) **Flight conveyor cable for a conduit scraping conveyor having a coating around the cable and a method for its manufacture**
Beschichtetes Kabel für einen Kratzscheiben-Rohrförderer sowie Verfahren zu dessen Herstellung
Câble à disques racleurs pour transporteur tubulaire ayant un revêtement autour du câble et méthode de fabrication

(30) Priority: 16.06.1995 DK 69295
(43) Date of publication of application: 09.04.1997
(73) Proprietor: SKIOLD MULLERUP A/S, 5540 Ullerslev (DK)
(72) Inventor: Pedersen, Poul Kingo, 5300 Kerteminde (DK)
(74) Representative: Skoett-Jensen, Knud

(56) References cited:
- EP-A- 0 659 661
- US-A- 2 680 511

## Description

The present invention relates to a flight conveyor cable for a conduit scraping conveyor, preferably for stall-feeding devices, consisting of a steel cable and relatively closely spaced disc-shaped flights provided thereon.

Conduit conveyors are carried out so that the flight discs have a diameter that is slightly smaller than the internal diameter of the conduit in which they are advanced, and that the cable extends through the centre of the flights and is secured thereto, as the flights apart from the transporting effect also following a well-known principle act as force transmitting links in connection with the advancement of the conveyor around pulling and guiding wheels. As this relates to an endless cable that during its advancement will undergo several turns this causes wear and fatigue of the cable in connection with the associated bending of the cable, in particular in association with the pulling and guiding wheels, and it is a well known fact that a long durability of such conveyor cables cannot be expected.

The steel cables can be carried out with a certain content of lubrication means that supples the cable and potentially extends its durability, but is hardly possible to maintain the cable in this manner, since as it gradually dries out incipient damages such as broken wire pieces can occur. The cable is weakened and further worn by intrusion of hard particles from the surroundings and the conveyor cable must be exchanged when even loose wire strand pieces are rejected, that for obvious reasons are totally unacceptable in the conveyed food.

The problem has been known for quite some time and one has had to accept the relatively short duration of the cables.

For other purposes, especially where high demands for hygiene are required, it is known to use cables that are provided with an elastomeric coating. This would be ideal in the present situation, but tests have shown that it is difficult by such cables to obtain a required proper fixation of the flights in relation to the cable itself, as a preferred fixation is provided through a simple injection moulding of the flights directly on the cable.

From the literature some suggestions are known for stepwise provision of the cable partly with flights and partly with coating between the flights.

From the patent publications US-A-2,667,962 and FR-A-1,549,145 flight conveyor cables are known of the kind where flight discs and distance pieces are alteredly mounted on the wire, almost like pearls on a string. In particular in US-A-2,667,962 the flights are secured by plates arranged on each side, said plates each having an annular flange that tightens around the cable and thereby through a frictional contact keep the individual flights in position. After a flight is brought into position a number of distance pieces are inserted and glued to the annular flanges at their overlaps. The flights and the distance pieces can furthermore be adhesively secured to the steel cable. Such a type of flight conveyor cable is however extraordinary complicated in its assembly and extremely complex and costly to manufacture. The distance pieces can also have an unfortunate stiffening effect causing the cable during bending to have a tendency of absorbing these bends in the joins between the parts, i.e. in the joins of the flights and the joins between the distance pieces.

It is furthermore known from GB-A-2 224 254, a suggestion of providing a conveyor rope with both flights and intermediate coating for protection of the rope, as a forming tool is used that facilitates a moulding on the rope of a flight disc having extended thin rope coverings that at both sides are extending slightly more than half of the distance between the two neighbouring flights. It is hereby aimed to obtain a good strength of the flights that can be made with a suitable large thickness, and also at the same time through the rather thin walled rope coverings to create easy bendable coatings on the rope.

In relation to the invention such a solution has been examined and thereafter dropped. It has not been succeeded to find a material with the required quality that can fulfil the requirements for both stiffness of the flights and for the flexibility of the coating parts. Furthermore, it has been experienced that by the injection moulding it is difficult to obtain the necessary integrity in the overlapping sections that occur halfway between the flights.

By the invention it has been realised that by an altered injection moulding technique it is, however, possible to provide an extremely advantageous cable product, and on this background the invention in particular relates to a conveyor cable for a conduit scraping conveyor, preferably for stall-feeding devices, consisting of a steel cable and relatively closely spaced disc-shaped flights provided thereon, where said disc-shaped flights create a pressure mould-like binding to the steel cable and with a moulded cable coating.

According to the invention a dual injection technique is used, by which the flights are being injection moulded in a for them suitable material under simultaneous creation at both sides of shortly extending thin sockets around the cable, whereafter the distance between the neighbouring flights is teemed with a separate and optimised elastomeric coating material which is cast overlapping said sockets. Hereby both materials can be optimised for their respective purposes, whereby a remarkable better durability is obtained in relation to the flight conveyor cables of the prior art, just as a flight conveyor cable according to the invention is supple and wear resistant against the repeatedly occurring bends during its use.

The durability at the overlaps could further be improved by providing the wire coating with an annulary shaped rim at each end, whereby a firm and elastic fastening of the wire coating on the sockets is secured. By simultaneously providing the sockets with one or more protrusions this elastically fastening effect can be further improved. Additionally, it has been discovered that by choosing a thermoplastic elastomer as coating material an outstanding good and resistant connection in the overlap area is obtainable. Preferably polypropylene is used for the flights and a polypropylene based elastomer is used for the coatings. Alternatively, polyamide is used for the flights and a polyamide based elastomer is used for the coating.

As a further protection of the cable, said cable can be lubricated with a lubrication means. The cable consist in an advantageous embodiment of a core strand which is saturated with a lubrication means, such as e.g. mineral grease or an oil, around which core strand a number of strands are wound. This provides a clean fixation of the flights and the coating to the strands of the cable, because said strands first subsequently are being lubricated as the surplus of lubrication means from the core strand penetrates into and lubricates the rest of the cable. The cable coating makes sure that the lubrication means remain in between the strands and the filaments of the cable, whereby the cable is prevented from drying out. The coating provides also the effect that the cable never obtains contact with the food by the use of the conveyor cable in a stall-feeding device, whereby the quality of the food transported by a conveyor cable according to the invention is not compromised.

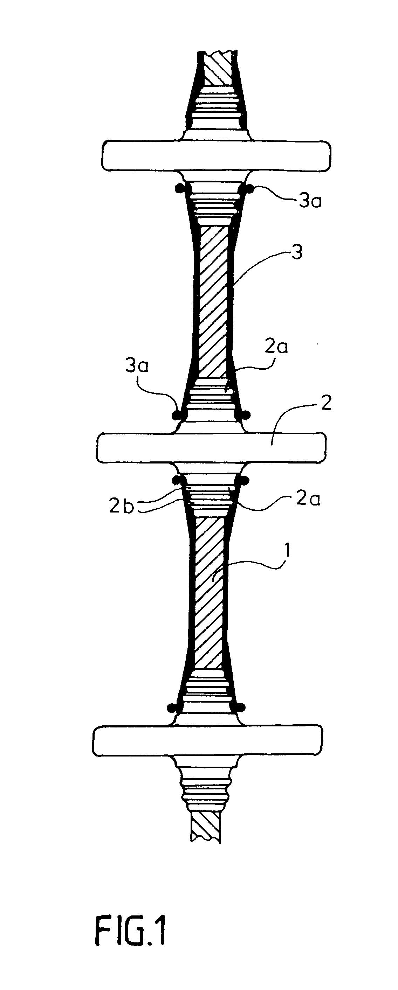

The invention is illustrated by an example of an embodiment on the drawing, where 1 refers to a steel cable that by injection moulding is provided with disc-shaped flights 2, that are created with at both sides extending, outwardly tapered socket parts 2a in order to form a smooth transition between the disc and the cable for securing a soft bending of the cable.

After the creation of each new flight 2 the distance between this and the previous flight is placed in a forming tool, in which a wire coating is moulded of a more or less flexible material, such as a thermoplastic elastomer. The wire coating is preferably at each of the ends finish with an annular rim 3a. The sockets 2a are provided with radially extending annular protrusions 2b that secures a good fixation of the ends of these protrusions and the wire coating 3. This fastening effect is enhanced in the illustrated embodiment as the rims 3a of the wire coating 3 cooperate with the protrusions 2b of the sockets 2a.

In a free condition the thin outer ends of the sockets 2 would have a tendency to become garnetted by the bendings of the cable, but they will be stabilised against this by the surrounding moulding of the cable coating 3, when the material is able to by the teeming to intimately connect itself with the already hardened material of the surfaces of the sockets.

## Claims

1. Flight conveyor cable for a conduit scraping conveyor, preferably for stall-feeding devices, consisting of a steel cable (1) and relatively closely spaced flights provided thereon, that create a pressure mould-like binding to the steel cable (1), and a moulded wire coating (3), characterised in that the flights (2) are in a relatively stiff or rigid elastomer moulded with at both sides shortly extending thin sockets (2a) around the steel cable (1) whilst the coating material is a separate elastic elastomer cast between the neighbouring flights (2) as well around the steel cable (1) as over at least an outer part of the sockets (2a) so that the wire coating (3) is in a firm binding with the sockets (2a).

2. Flight conveyor cable according to claim 1, characterised in that the coating material is a thermoplastic elastomer.

3. Flight conveyor cable according to claim 1 and 2, characterised in that the material of the flights is polypropylene and the material of the coating is a polypropylene based elastomer.

4. Flight conveyor cable according to claim 1 and 2, characterised in that the material of the flights is polyamide and the material of the coating is a polyamide based elastomer.

5. Flight conveyor cable according to any of the claims 1-4, characterised in that the steel cable (1) consists of a core strand that is saturated with lubrication means such as preferably mineral grease or oil and around which a number of strands are wound.

6. Flight conveyor cable according to any of the claims 1-5, characterised in that the sockets (2a) are provided with protrusions (2b).

7. Flight conveyor cable according any of the claims 1-6, characterised in that the wire coating (3) at each of the ends is ended with an annular rim (3a) around the sockets (2a).

8. A method for the manufacture of a flight conveyor cable according to any of the claims 1-7, characterised by a dual injection moulding technique a successive creation by injection moulding of respectively the flight-discs (2) with sockets (2a) and the coating (3) of the socket and cable sections between the disc parts of the flights is carried out.

## Patentansprüche

1. Kratzer- oder Mitnehmer-Förderseil für einen Kanal- oder Rinnen-Kratzförderer, vorzugsweise für Stallfütterungsvorrichtungen, bestehend aus einem Stahlseil (1) und relativ dicht zueinander beabstandeten, darauf vorgesehenen Mitnehmern/Kratzern, die eine Druckform-ähnliche Verbindung mit dem Stahlseil (1) begründen, und einem geformten Drahtüberzug (3),
dadurch gekennzeichnet, daß die Mitnehmer (2) aus einem relativ steifen oder starren Elastomer bestehen, der mit auf beiden Seiten kurz sich erstreckenden dünnen Muffen-Ansätzen (2a) um das Stahlseil (1) herum geformt ist, während das Überzugsmaterial ein separater elastischer Elastomer ist, der zwischen den benachbarten Mitnehmern (2) sowohl um das Stahlseil (1) herum als auch über mindestens einen äußeren Teil der Ansätze (2a) gegossen ist, so daß der Drahtüberzug (3) sich in fester Verbindung mit den Ansätzen (2a) befindet.

2. Mitnehmer-Förderseil nach Anspruch 1,
dadurch gekennzeichnet, daß das Überzugsmaterial ein thermoplastischer Elastomer ist.

3. Mitnehmer-Förderseil nach Anspruch 1 und 2,
dadurch gekennzeichnet, daß das Material der Mitnehmer Polypropylen und das Material des Überzugs ein Elastomer auf der Grundlage von Polypropylen ist.

4. Mitnehmer-Förderseil nach Anspruch 1 und 2,
dadurch gekennzeichnet, daß das Material der Mitnehmer Polyamid und das Material des Überzugs ein Elastomer auf der Basis von Polyamid ist.

5. Mitnehmer-Förderseil nach einem der Ansprüche 1 bis 4,
dadurch gekennzeichnet, daß das Stahlseil (1) aus einem Kernstrang besteht, der mit Schmiermitteln wie vorzugsweise mineralischem Fett oder Öl getränkt ist und um den eine Anzahl Stränge gewickelt sind.

6. Mitnehmer-Förderseil nach einem der Ansprüche 1 bis 5,
dadurch gekennzeichnet, daß die Ansätze (2a) mit Vorsprüngen (2b) versehen sind.

7. Mitnehmer-Förderseil nach einem der Ansprüche 1 bis 6,
dadurch gekennzeichnet, daß der Drahtüberzug (3) an jedem der Enden in einem kreisförmigen Kranz (3a) um die Ansätze (2a) endet.

8. Ein Verfahren zur Herstellung eines Kratzer- oder Mitnehmer-Förderseils nach einem der Ansprüche 1 bis 7, dadurch gekennzeichnet, daß durch eine duale Spritzgießtechnik eine aufeinanderfolgende, jeweils durch Spritzgießen erfolgende Erzeugung der Kratzer- oder Mitnehmerscheiben (2) mit Muffen-Ansätzen (2a) und dem Überzug (3) der Ansatz- und Seilabschnitte zwischen den Scheibenteilen der Mitnehmer ausgeführt wird.

## Revendications

1. Câble de transporteur à raclettes pour un transporteur à raclage de conduits, de préférence pour des dispositifs d'alimentation de stalles, constitué d'un câble d'acier (1) et de raclettes relativement étroitement espacées prévues sur celui-ci, qui créent une liaison analogue à un moulage sous pression sur le câble d'acier (1), et un revêtement de câble moulé (3),
caractérisé en ce que les raclettes (2) sont en un élastomère relativement raide ou rigide, moulé, au niveau des deux côtés, avec des manchons minces (2a) s'étendant de façon courte autour du câble d'acier (1), tandis que la matière de revêtement est un élastomère élastique séparé, coulé entre les raclettes voisines (2) ainsi qu'autour du câble d'acier (1) comme sur au moins une partie externe des manchons (2a), de sorte que le revêtement de câble (3) est en liaison ferme avec les manchons (2a).

2. Câble de transporteur à raclettes selon la revendication 1,
caractérisé en ce que la matière de revêtement est un élastomère thermoplastique.

3. Câble de transporteur à raclettes selon les revendications 1 et 2,
caractérisé en ce que la matière des raclettes est du polypropylène et la matière du revêtement est un élastomère à base de polypropylène.

4. Câble de transporteur à raclettes selon les revendications 1 et 2,
caractérisé en ce que la matière des raclettes est du polyamide et la matière du revêtement est un élastomère à base de polyamide.

5. Câble de transporteur à raclettes selon l'une quelconque des revendications 1-4,
caractérisé en ce que le câble d'acier (1) comprend un toron central qui est saturé de moyens de lubrification tels que, de préférence, de l'huile ou de la graisse minérale et autour duquel une pluralité de torons sont enroulés.

6. Câble de transporteur à raclettes selon l'une quelconque des revendications 1-5,
caractérisé en ce que les manchons (2a) sont munis de saillies (2b).

7. Câble de transporteur à raclettes selon l'une quelconque des revendications 1-6,
caractérisé en ce que le revêtement de câble (3), à chacune des extrémités, est terminé par un bord annulaire (3a) autour des manchons (2a).

8. Procédé pour la fabrication d'un câble de transporteur à raclettes selon l'une quelconque des revendications 1-7,
caractérisé par une technique de moulage par injection double, une réalisation successive, par moulage par injection, respectivement, des disques de raclage (2) avec des manchons (2a), et du revêtement (3) des sections de câble et de manchons entre les parties des disques des raclettes est mise en oeuvre.
